Europäisches Patentamt

European Patent Office

Office européen des brevets

(19)

(11) Numéro de publication : **0 108 025**
**B1**

(12)

# FASCICULE DE BREVET EUROPÉEN

(45) Date de publication du fascicule du brevet :
**30.07.86**

(21) Numéro de dépôt : **83420165.9**

(22) Date de dépôt : **17.10.83**

(51) Int. Cl.⁴ : **B 01 D 13/00**, A 61 M 1/16,
F 28 F 3/08

(54) **Intercalaire pour appareil à membranes.**

(30) Priorité : **28.10.82 FR 8218371**

(43) Date de publication de la demande :
**09.05.84 Bulletin 84/19**

(45) Mention de la délivrance du brevet :
**30.07.86 Bulletin 86/31**

(84) Etats contractants désignés :
**BE CH DE GB IT LI NL SE**

(56) Documents cités :
**EP-A- 0 053 084**
**EP-A- 0 055 680**
**FR-A- 642 884**
**FR-A- 997 591**
**FR-A- 2 145 860**

(73) Titulaire : **HOSPAL INDUSTRIE**
**7, Avenue Lionel Terray**
**F-69330 Meyzieu (FR)**

(72) Inventeur : **Clermont, Christian**
**Chemin de la Poyat Morance**
**F-69480 Anse (FR)**
Inventeur : **de Moncuit, Marc**
**10, Boulevard Jules Favre**
**F-69006 Lyon (FR)**
Inventeur : **Gauckler, Jacques**
**18, rue de Tourvielle**
**F-69005 Lyon (FR)**

(74) Mandataire : **Gauckler, Jacques et al**
**Service Brevets HOSPAL HOSPAL C.O.T. B.P. 21**
**F-69881 Meyzieu Cedex (FR)**

Jouve, 18, rue St-Denis, 75001 Paris, France

EP 0 108 025 B1

## Description

La présente invention concerne un échangeur de fluides et plus spécialement un nouvel intercalaire support de membrane pour un tel échangeur.

Ces échangeurs sont généralement séparés, par une membrane soit semi-perméable, soit étanche, en plusieurs compartiments parcourus par des fluides, les échanges de chaleur et/ou de matières s'effectuant par diffusion et aussi par convexion. L'un des fluides traités peut être notamment un fluide biologique, par exemple du sang ou du plasma sanguin. De tels appareils sont utilisés par exemple comme némodialyseurs ou oxygénateurs de sang.

Le FR-A-997 591 décrit un échangeur de chaleur à empilement de plaques métalliques minces, alternées pour l'espacement et les échanges. Il ne possède donc pas de membrane, ni de moyens pour faire circuler l'un des fluides entre deux membranes, aussi conviendrait-il mal, notamment pour traiter des liquides délicats tels que le sang.

On connaît déjà divers types d'intercalaires supports de membrane plane ou tubulaire aplatie. Ces intercalaires peuvent être constitués par une plaque pleine comportant sur chaque face une zone d'échanges s'étendant longitudinalement entre une zone de distribution et une zone de collecte pour l'un des fluides. Ils comportent aussi des moyens pour l'introduction et l'évacuation axiale ou latérale des fluides, ainsi que des moyens pour assurer une étanchéité périphérique. De tels intercalaires ont déjà été décrits par exemple dans les demandes de brevet européen 53 084 et 55 680.

Avec de tels intercalaires, la zone d'échanges est balayée sur chaque face par un fluide, par exemple par du liquide de dialyse, qui s'écoule en filets sensiblement parallèles, quoique sinueux, depuis la zone de distribution jusqu'à la zone de collecte. Ces intercalaires ont un fonctionnement en général satisfaisant.

Cependant d'une part le fluide doit se répartir en filets parallèles, sur toute la surface d'échanges, ce qui peut correspondre à des vitesses de circulation relativement lentes et d'autre part les pertes de charge ne sont pas toujours égales sur toute la largeur de l'intercalaire, notamment sur les bords. Aussi il apparaît que l'efficacité des échanges pourrait être augmentée par une répartition et une circulation améliorées du liquide de dialyse et aussi par un gain de surface utile.

Par ailleurs on observe que des membranes de dialyse minces et présentant une flexibilité transversale élevée comme la membrane commercialisée sous le nom de Cuprophan ®, s'affaissent dans les canaux transversaux séparant les nervures successives de soutien des membranes. On peut pallier à cet inconvénient en la soutenant avec des nervures continues, mais alors on risque, par le dépôt d'une particule solide ou l'accrochage d'une bulle entre deux nervures continues voisines de gêner ou d'arrêter la circulation du fluide dans une rainure d'un bout à l'autre de la surface d'échanges.

La présente invention a pour objet un intercalaire qui ne présente pas les inconvénients de l'art antérieur. Plus précisément, la présente invention a pour objet un intercalaire qui permette un écoulement réparti de manière définie à la fois en série et en parallèle d'un fluide sur chacune des deux faces opposées de la zone d'échanges.

Elle a aussi pour objet un intercalaire qui permette une répartition uniforme de ce fluide grâce à des parcours en parallèle équivalents du point de vue des pertes de charge entre la zone de distribution et la zone de collecte sur toute la largeur de la zone d'échanges.

Elle a également pour objet un intercalaire qui permette, pour un débit donné du fluide s'écoulant entre l'intercalaire et les membranes adjacentes, de choisir sa vitesse moyenne d'écoulement sur la zone d'échanges, par la simple détermination de l'angle que fait la direction moyenne de l'écoulement du fluide avec l'axe longitudinal de l'intercalaire.

Elle a aussi pour objet un intercalaire qui utilise une surface utile maximum, sans zone morte.

Elle a ainsi pour objet un intercalaire qui permette d'obtenir une efficacité améliorée des échanges de chaleur et/ou de matières au travers d'une membrane semi-perméable ou même non perméable.

Elle a encore pour objet un intercalaire qui constitue un excellent support de membrane, car offrant la possibilité de dessiner des éléments en reliefs, supports de la membrane, d'une grande diversité, notamment continus.

Elle a en outre pour objet un intercalaire dont la fabrication et le montage sont simples et économiques, fiable à l'usage.

Il a maintenant été trouvé et ceci fait l'objet de la présente invention à la réalisation de laquelle ont participé Messieurs Christian Clermont, Marc de Moncuit, Jacques Gauckler, un intercalaire pour dispositif échangeur de chaleur et/ou de matières entre fluides, notamment de sang, à travers au moins une membrane, ledit intercalaire étant constitué par une plaque pleine comportant sur les deux faces opposées des éléments en relief supports de membrane et présentant sur chaque face une zone d'échanges s'étendant longitudinalement entre une zone de distribution et une zone de collecte pour l'un des fluides, des bourrelets continus d'épaisseur constante étant prévus sur le pourtour de la plaque pour assurer par superposition une étanchéité périphérique aux différents fluides, caractérisé en ce que ladite zone d'échanges est séparée sur au moins l'une des faces de ladite plaque pleine en compartiments distincts par au moins une nervure continue transversale se raccordant à ses deux extré-

2

mités auxdits bourrelets d'étanchéité périphérique, ladite nervure constituant une butée étanche qui canalise et dirige sur un côté le fluide s'écoulant entre la face dudit intercalaire et la membrane adjacente.

Les intercalaires selon la présente invention sont constitués chacun par une plaque support de membrane comportant sur les deux faces opposées des éléments en relief supports de membrane.

La plaque support est de préférence constituée par une plaque pleine qui peut être localement percée de quelques ouvertures pour l'introduction et/ou l'évacuation de fluides et/ou pour faciliter le centrage et le guidage des éléments les uns sur les autres lors du montage d'un appareil.

Cette plaque peut être flexible ou de préférence rigide ou semi-rigide. Flexible, elle peut être roulée en spirale et être ainsi utilisée sur des appareils de type bobinés. De préférence elle conserve une forme générale plane et en outre présente le plus souvent une surface allongée, par exemple essentiellement rectangulaire.

La partie médiane de l'intercalaire correspond le plus souvent à la zone d'échanges. Celle-ci est généralement placée entre deux zones semblables entre elles, prévues : la première pour la distribution d'un fluide vers la zone d'échanges et la seconde pour la collecte de ce même fluide, après traversée de la zone d'échanges. Elles seront donc désignées ici respectivement zone de distribution et zone de collecte.

Cette zone d'échanges peut être par exemple une zone d'échanges de chaleur de part et d'autre d'une membrane mince étanche aux fluides, mais elle est le plus souvent, essentiellement, une zone d'échanges de matières entre deux fluides à travers une membrane semi-perméable. Ainsi dans un hémodialyseur, il y aura échanges entre le sang et le liquide de dialyse et dans un oxygénateur de sang, échanges entre le sang et l'air, ou éventuellement un courant suroxygéné.

Un intercalaire selon l'invention peut être séparé des intercalaires adjacents soit par une membrane, soit de préférence par une paire de membranes, selon que l'appareil correspondant est du type « monomembranaire » ou « bimembranaire ». Dans le premier cas, deux fluides différents se déplacent de part et d'autre de la membrane qui est par exemple pliée en zigzags autour d'intercalaires successifs, chacun des fluides se déplaçant entre une face de la membrane et l'intercalaire correspondant.

Dans le deuxième cas, un premier fluide se déplace entre la paire de membranes, qui est constituée par exemple de deux membranes planes serrées de manière étanche sur les bords, ou d'une membrane tubulaire aplatie, alors que le deuxième fluide s'écoule entre chaque membrane et l'intercalaire correspondant.

Pour plus de commodité, la présente invention sera décrite ici plus en détails et sans en limiter la portée en se référant plus particulièrement à un hémodialyseur à empilement de plaques planes de type bimembranaire.

Un tel appareil est constitué de manière connue en soi par un empilement d'intercalaires séparant des membranes disposées par paires, l'ensemble étant maintenu serré de manière étanche dans un boîtier de contention. Des orifices axiaux ou de préférence latéraux, permettent respectivement l'introduction et l'évacuation à contre courant du sang et du liquide de dialyse chargé d'épurer le sang.

L'intercalaire selon l'invention comporte des moyens pour l'introduction et l'évacuation des fluides, une zone de distribution et une zone de collecte de l'un des fluides, ainsi que des moyens d'étanchéité périphérique. Tous ces moyens sont de tous types connus et ne sont pas critiques.

L'invention concerne spécifiquement les zones d'échanges. Celles-ci ont une structure telle qu'elles sont balayées par le liquide de dialyse selon un processus original. En effet le liquide de dialyse est préalablement réparti par tous moyens connus en soi, en deux courants circulant en parallèle sur chaque face de l'intercalaire. Au moins sur une face, par exemple sur la face supérieure, une nervure transversale continue, se raccordant à ses deux extrémités aux moyens assurant l'étanchéité périphérique, oblige le liquide de dialyse à s'écouler sur le côté. Par des moyens appropriés qui sont décrits plus loin en détails, le liquide de dialyse passe, puis circule sur la face opposée, soit de la membrane lorsque celle-ci est constituée par exemple par une membrane tubulaire aplatie, soit de l'intercalaire, lorsque la ou les membranes s'étendent latéralement jusqu'entre les moyens d'étanchéité périphérique (voir figures respectivement 5 et 2).

Circulant sur la face opposée, le liquide de dialyse atteint la zone de collecte, soit directement, soit indirectement après être revenu le nombre de fois nécessaire sur les faces opposées. La fraction de liquide de dialyse qui s'écoule d'abord sur (p. ex.) la face inférieure effectue, elle, un parcours en parallèle. Au total chaque fraction du liquide de dialyse balaye successivement « en série » les différents compartiments de la zone d'échanges. Et ensemble, ces deux fractions effectuent deux parcours hélicoïdaux aplatis conjoints qui balayent toute la surface d'échanges, tout en restant à l'intérieur des intercalaires et plus précisément à l'intérieur des moyens d'étanchéité périphérique de ces intercalaires. On a trouvé qu'une telle configuration de courants croisés procure une efficacité sensiblement améliorée des échanges de chaleur et/ou de matière à travers une membrane semiperméable ou non.

La compréhension de la présente invention sera facilitée par les figures ci-jointes qui illustrent, à titre d'exemples, schématiquement et sans échelle déterminée, divers modes de réalisation d'intercalaires selon l'invention.

La figure 1 est la vue partielle en plan d'un premier mode de réalisation d'un intercalaire selon l'invention.

La figure 2 est la vue en coupe partielle, agrandie, selon II-II de deux intercalaires selon la figure 1, superposés et serrant entre eux une paire de membranes.

La figure 3 est la vue en plan d'un second mode de réalisation de l'intercalaire selon l'invention.

La figure 4 est la vue en plan d'un troisième mode de réalisation de l'intercalaire selon l'invention.

La figure 5 est la vue en coupe partielle, agrandie, selon V-V de deux intercalaires selon la figure 4, superposés et serrant entre eux une membrane du type tubulaire aplatie.

Pour plus de commodité, les éléments homologues des intercalaires représentés dans les différentes figures seront désignés par les mêmes numéros.

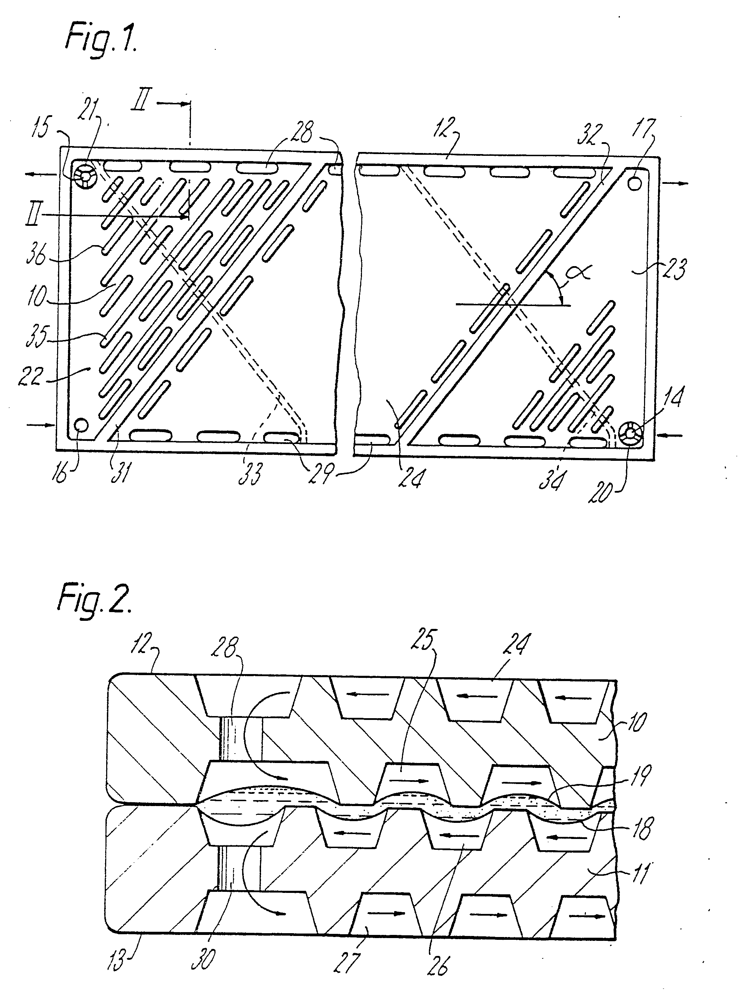

On observe figures 1 et 2 que les intercalaires (10 et 11) ont la forme générale d'une plaque pleine, mince, rectangulaire, munie sur son pourtour d'un bourrelet continu d'épaisseur constante (12, 13) assurant par superposition une étanchéité périphérique aux différents fluides, d'une manière connue en soi.

Ces intercalaires sont munis, à leurs extrémités latérales, dans les zones de distribution et de collecte (22, 23) représentées par simplification non hâchurées, d'ouvertures (14, 15, 16 et 17), respectivement pour l'introduction et l'évacuation du sang et du liquide de dialyse. Le liquide de dialyse s'écoule depuis l'ouverture (16) jusqu'à l'ouverture (17) entre chaque intercalaire et la membrane adjacente correspondante. Le sang s'écoule à l'intérieur d'une paire de membranes (18, 19) munies d'ouvertures se superposant aux ouvertures (14) et (15) pour le sang. Des anneaux (20, 21) de types connus munis de rainures radiales, permettent au sang de s'introduire depuis l'ouverture (14) dans l'espace compris entre les deux membranes (18, 19) puis de pénétrer dans l'ouverture (15) pour être ensuite évacué.

La présente invention concerne spécifiquement les zones d'échanges (24, 25, 26, 27), dont les intercalaires (10, 11) sont pourvus sur les deux faces, entre les zones de distribution et de collecte (22, 23), à l'intérieur du bourrelet d'étanchéité (12, 13).

Selon la présente invention, l'une au moins des faces de l'intercalaire (10) est séparée en compartiments distincts par au moins une nervure-butée continue transversale se raccordant à ses deux extrémités au bourrelet d'étanchéité (12). Par exemple sur la face supérieure de l'intercalaire représenté figure 1, deux nervures-butées obliques (31, 32) déterminent trois compartiments distincts. Chaque compartiment occupe le volume compris entre d'une part, une portion de la zone d'échanges sur une face d'un intercalaire délimitée par les moyens d'étanchéité périphérique et les nervures-butées et d'autre part, la membrane adjacente reposant sur cette même face de l'intercalaire. Généralement la face supérieure des nervures-butées (31, 32) est dans le même plan que la face supérieure du bourrelet d'étanchéité (12) pour supporter la membrane adjacente (18) de façon étanche.

Chaque nervure-butée guide, notamment dans sa partie médiane, le liquide de dialyse, obliquement, vers un côté de la zone d'échanges. A chaque extrémité, les nervures (31, 32) jouent chacune le rôle d'une butée obligeant le liquide de dialyse à changer de compartiment pour circuler sur une autre face de l'intercalaire ou de la membrane.

Avantageusement l'intercalaire (10) est muni sur ses deux faces opposées de nervures-butées continues, transversales, généralement obliques et identiques entre elles. Les nervures-butées (33, 34) situées sur la face inférieure de l'intercalaire sont homologues des nervures-butées (31, 32) ; elles sont représentées figure 1 en traits interrompus et elles apparaissent se croiser de manière symétrique par rapport à l'axe longitudinal de l'intercalaire.

Selon une caractéristique avantageuse de la présente invention, la zone d'échanges de l'intercalaire peut être pourvue d'orifices permettant au liquide de dialyse qui s'est déjà écoulé sur une partie de la zone d'échanges entre chaque face de l'intercalaire et la membrane adjacente correspondante, de traverser l'intercalaire dans toute son épaisseur pour apparaître sur la face opposée de l'intercalaire et poursuivre son écoulement dans la zone d'échanges jusqu'à atteindre, directement ou indirectement, la zone de collecte.

Ainsi l'intercalaire selon la figure 1 est-il muni d'une première série d'orifices (28) disposés à l'intérieur de la zone d'échanges, longitudinalement, à proximité du bourrelet d'étanchéité (12). Par les orifices (28) qui constituent une série d'orifices d'une première famille, le liquide de dialyse s'écoule de la face supérieure de l'intercalaire sur la face inférieure (voir figure 2), dans l'espace situé entre la zone d'échanges de l'intercalaire et la membrane adjacente (19).

Le même intercalaire est également muni d'une seconde série d'orifices (29) disposés à l'intérieur de la zone d'échanges, à proximité ou bourrelet d'étanchéité longitudinal opposé au précédent. Par les orifices (29) qui constituent une série d'orifices d'une seconde famille, le liquide de dialyse s'écoule de la face inférieure de l'intercalaire sur la face supérieure, dans l'espace situé entre la zone d'échange de l'intercalaire et la membrane adjacente.

Naturellement les intercalaires adjacents tels que (11) sont identiques à l'intercalaire (10) et sont munis d'orifices (30) identiques aux orifices (28) [cf. figure 2].

Il apparaît ainsi que le liquide de dialyse qui pénètre par l'orifice (16) dans la zone de distribution (22) de l'intercalaire (10) se répartit simultanément sur ses faces inférieure et supérieure par tous moyens connus en soi (non représentés). Sur la surface d'échanges, la fraction supérieure, canalisée par la nervure-butée (31) gagne la face inférieure par les orifices (28), puis traversant la face inférieure, atteint les orifices (29) et traverse à nouveau la face supérieure de la zone d'échanges. Ce parcours est répété jusqu'à atteindre la zone de collecte (23) et l'orifice (17) par où il est évacué.

Simultanément la fraction inférieure, canalisée par la nervure-butée (33) gagne les orifices (29) d'où elle atteint la face supérieure qu'elle traverse jusqu'aux orifices (28), etc... jusqu'à atteindre également la zone de collecte (23) et l'orifice d'évacuation (17).

Le sang lui, circule entre les orifices (14) et (15), selon une direction générale à contre-courant, dans l'espace compris entre les membranes (18) et (19). Le sang peut franchir librement entre les membranes chaque nervure-butée, puisque les nervures-butées de deux intercalaires adjacents se faisant face, généralement se croisent ponctuellement, laissant de part et d'autre, un libre passage soit au-dessus, soit au-dessous.

On notera que les nervures-butées (31, 32, 33, 34) ont généralement une double fonction de butée : d'abord celle de canaliser le liquide de dialyse sur le côté, vers les orifices (28, 29), la membrane adjacente reposant sur toute leur longueur ; ensuite, par croisement avec au moins les différents éléments homologues de la face opposée et des intercalaires adjacents, celle de maintenir en au moins un ou plusieurs points de croisement un écartement prédéterminé pour les intercalaires et les membranes dont l'empilement constitue l'échangeur.

On sait qu'il est préférable que le liquide de dialyse balaye la surface d'échanges en s'écoulant par des chemins présentant sensiblement tous la même longueur et les mêmes obstacles et conduisant donc aux mêmes pertes de charge. C'est une condition nécessaire pour obtenir un balayage uniforme de la surface d'échanges et éviter aussi bien les zones mortes que les passages préférentiels. Pour cela toutes les fractions du liquide de dialyse doivent notamment traverser la surface d'échanges de l'intercalaire le même nombre de fois, soit n ce nombre ; n est un nombre entier généralement compris entre 0 et 10 et préférentiellement entre 0 et 5.

Par ailleurs les nervures-butées (31, 32, 33, 34) sont de préférence rectilignes et sont inclinées en moyenne, par exemple entre leurs deux extrémités au contact du bourrelet d'étanchéité (12) d'un angle alpha sur l'axe longitudinal de l'intercalaire. La tangente de l'angle alpha est égale au rapport de la largeur de la surface d'échanges à une fraction de sa longueur. Pour que toutes les fractions du liquide de dialyse traversant n fois la zone d'échanges de l'intercalaire, il suffit que la tangente alpha soit égale au rapport de la largeur de la surface d'échanges à sa longueur divisée par n.

En faisant varier n, par exemple en augmentant n, alpha augmente, la largeur du passage offert au liquide de dialyse diminue, donc à dépit donné, égal, la vitesse d'écoulement augmente. On a ainsi, selon l'invention, la possibilité de choisir pour un débit donné du liquide de dialyse, un domaine de vitesses d'écoulement optimum et par là, d'améliorer l'efficacité des échanges.

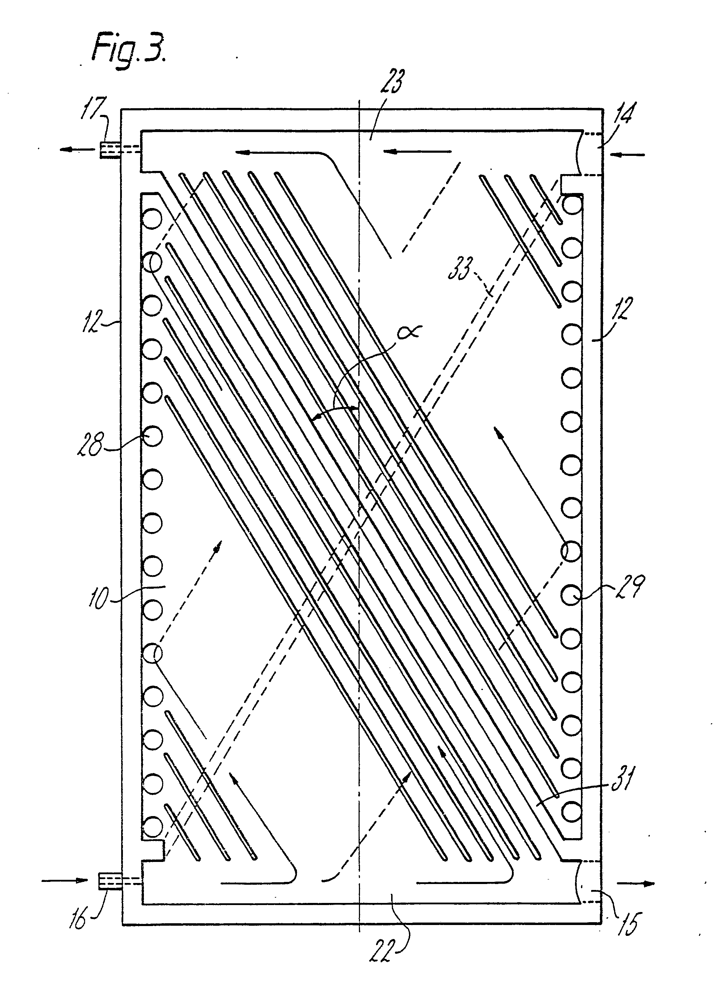

Ainsi la figure 3 montre un intercalaire d'un type préféré, caractérisé par : n = 1, c'est-à-dire que toute fraction du liquide de dialyse ne traverse qu'une seule fois la zone d'échanges pour passer de la face supérieure à la face inférieure et vice-versa, entre la zone de distribution et la zone de collecte.

Ce résultat peut être obtenu et même garanti par la présence d'une nervure-butée continue (31) se raccordant aux deux bourrelets d'étanchéité longitudinaux (12), et de son homologue (33) [en traits interrompus] sur chacune des faces opposées de la zone d'échanges de l'intercalaire. Chaque nervure-butée (31, 33) est ainsi sensiblement parallèle aux diagonales de la surface d'échanges.

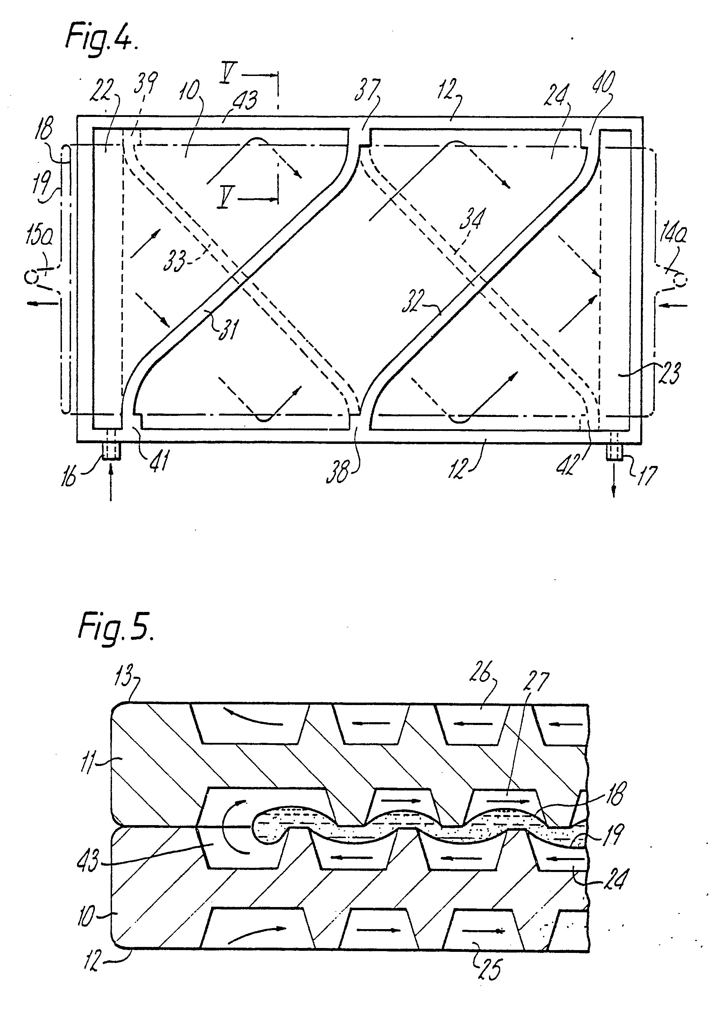

Les intercalaires représentés figures 4 et 5 montrent un autre mode de réalisation de la présente invention. La membrane (18, 19) est du type tubulaire aplatie ; elle est parcourue intérieurement par le sang qui, par exemple, pénètre et est évacué par des orifices axiaux, respectivement (14a) et (15a). Cette membrane a la forme générale d'une poche fermée qui, pour plus de clarté, est représentée figure 4 en traits mixtes, débordant de l'intercalaire (10). En réalité, seuls les orifices (14a) et (15a) s'étendent nettement hors de l'intercalaire (10) et traversent le dispositif d'étanchéité périphérique (12), localement incurvé à leur endroit.

Les nervures-butées (31) et (34) d'une part, et (32, 33) d'autre part, se recouvrent à leurs extrémités pour former ensemble des butoirs (37) et (38). Ces butoirs correspondent à des excroissances locales internes du dispositif d'étanchéité périphérique (12) et (13), dans ses parties longitudinales. De telles excroissances (39, 40, 41, 42) sont disposées notamment aux quatre coins de la zone d'échanges.

Le liquide de dialyse qui circule par exemple sur la face supérieure de l'intercalaire (10) et d'abord sous la membrane (18, 19), dans le compartiment situé à gauche de la nervure-butée (31), contourne latéralement la membrane puis s'écoule sur celle-ci (voir flèches) en passant par l'orifice (43) ménagé d'une part entre les dispositifs d'étanchéité longitudinaux des intercalaires (10) et (11) et la membrane (18, 19) et d'autre part, entre les butoirs (37) et (39).

Ainsi l'ensemble du liquide de dialyse qui s'écoule dans ce premier compartiment, contourne la membrane (18, 19) par un orifice unique. Dans ce mode de réalisation particulier cet orifice ne traverse pas la paroi d'un intercalaire. Il est constitué par une cavité longitudinale étroite telle qu'une rainure disposée à l'intérieur et contre les parties longitudinales du dispositif d'étanchéité périphérique de chaque intercalaire. Par superposition de deux intercalaires, les deux rainures se font face et définissent la cavité constituant l'orifice (43) par lequel le liquide de dialyse contourne la membrane pour s'écouler de la face inférieure à la face supérieure ou vice-versa. Chaque rainure est le plus souvent constituée par l'absence de relief support de membrane à cet endroit. On dispose ainsi d'un nouveau moyen permettant de faire circuler un fluide autour d'une membrane en deux fractions effectuant deux parcours hélicoïdaux aplatis conjoints qui balayent et se croisent sur toute la surface d'échanges, tout en restant à l'intérieur de la zone d'échanges des intercalaires.

Naturellement, si désiré, il est possible, par exemple avec des membranes planes repliées sur un côté et des intercalaires munis d'orifices sur un côté seulement, de combiner de plusieurs manières les différents modes de réalisation ci-avant décrits et représentés, le liquide de dialyse circulant par exemple en zig-zag, alternativement autour d'une paire de membranes et autour d'un intercalaire.

Naturellement les membranes telles que (18, 19) sont supportées par les intercalaires, outre au moyen des nervures-butées (31, 32, 33, 34) par des éléments en relief de tous types connus en soi : nervures continues, discontinues, ou multipoints en forme de cônes, pyramides, prismes, ... Par exemple on a représenté figure 1 des nervures continues (35) alternant avec des nervures discontinues (36), parallèles aux nervures-butées (31, 32, 33, 34) et se croisant dos à dos avec les nervures homologues de la face opposée. La disposition relative de ces différents éléments en relief supports de membrane est de type connu en soi. Ces éléments peuvent par exemple être disposés dans le sens général de l'écoulement du liquide de dialyse, également en zig-zag, ou selon des ondulations.

Avantageusement ces nervures, continues ou discontinues, qui guident l'écoulement du liquide de dialyse et supportent la membrane, peuvent avoir un profil longitudinal de hauteur non uniforme, comme décrit dans la demande de brevet européen 55 680. De même elles peuvent être de hauteurs légèrement différentes, comme décrit, par exemple, dans la demande de brevet européen 64 931. Ces deux dernières dispositions peuvent si nécessaire être combinées ensemble.

Parmi les divers avantages de la nouvelle structure d'intercalaires selon l'invention, on note un excellent soutien des membranes minces et flexibles, grâce à des jeux de nervures continues et obliques par rapport au sens d'étirement des membranes. Elles permettent ainsi une redistribution du fluide circulant entre l'intercalaire et la membrane à chaque changement de compartiment, ce qui évite les inconvénients constatés antérieurement, notamment de mise hors circuit d'une rainure à travers toute la zone d'échanges.

On remarque également que la fabrication de ces intercalaires ne pose aucun problème particulier ; que leur maintien en place une fois assemblés en appareils est amélioré par le rôle des nervures-butées qui, en se croisant, constituent par superposition des piliers de hauteur constante ; que l'étanchéité est obtenue par simple serrage des intercalaires et membranes superposées, ce qui conduit à une excellente fiabilité, ainsi qu'à une bonne compacité et à une bonne économie de fabrication et d'emploi.

La forme, le nombre et la disposition relative des nervures-butées telles que (31, 32, 33, 34), ainsi que des orifices tels que (28, 29, 43) peuvent naturellement faire l'objet de nombreuses variantes de réalisation à la portée du technicien sans sortir du cadre de la présente invention.

**Revendications**

1. Intercalaire pour dispositif échangeur de chaleur et/ou de matières entre fluides, notamment de sang, à travers au moins une membrane, ledit intercalaire étant constitué par une plaque pleine comportant sur les deux faces opposées des éléments en relief (35, 36) supports de membrane et présentant sur chaque face une zone d'échanges s'étendant longitudinalement entre une zone de distribution (22) et une zone de collecte (23) pour l'un des fluides, des bourrelets continus d'épaisseur constante (12, 13) étant prévus sur le pourtour de la plaque pour assurer par superposition une étanchéité périphérique aux différents fluides, caractérisé en ce que ladite zone d'échanges est séparée sur au moins l'une des faces de ladite plaque pleine en compartiments distincts par au moins une nervure continue transversale (31, 32, 33, 34) se raccordant à ses deux extrémités auxdits bourrelets d'étanchéité périphérique, ladite nervure constituant une butée étanche qui canalise et dirige sur un côté le fluide s'écoulant entre la face dudit intercalaire et la membrane adjacente.

2. Intercalaire selon la revendication 1, caractérisé en ce que chacune de ses faces opposées est divisée en compartiments distincts par au moins une desdites nervures-butées.

3. Intercalaire selon la revendication 2, caractérisé en ce que lesdites nervures-butées (31, 32, 33, 34) se croisent dos-à-dos et maintiennent aux points de croisement les membranes et intercalaires adjacents à des distances constantes précises.

4. Intercalaire selon l'une quelconque des revendications précédentes, caractérisé en ce que, à ladite nervure-butée (31-34) est associé dans ladite zone d'échanges (24-27) au moins un orifice (28, 30 ; 43) ménagé dans l'épaisseur de l'intercalaire (10, 11), permettant à un fluide de s'écouler depuis une face de l'intercalaire sur la face opposée.

5. Intercalaire selon la revendication 4, caractérisé en ce qu'il comprend dans la zone d'échanges (24-27) une pluralité d'orifices (28) d'une première famille permettant audit fluide de s'écouler d'une première face de la zone d'échanges sur la face opposée, dite deuxième face, et en ce qu'il comprend également une pluralité d'orifices (29) d'une deuxième famille permettant audit fluide de s'écouler de ladite deuxième face de la zone d'échanges sur ladite première face.

6. Intercalaire selon la revendication 5, caractérisé en ce que lesdits orifices (28, 29) de la première et de la deuxième famille sont alignés respectivement à l'intérieur de chacun des deux bords longitudinaux de l'intercalaire.

7. Intercalaire selon l'une quelconque des revendications 1 à 3 caractérisé en ce que lesdits bourrelets (12, 13) sont munis dans leurs parties longitudinales, aux points de raccordement avec lesdites nervures-butées, d'excroissances internes (39-42) constituant des butoirs (37, 38) contre lesquels la membrane (18, 19) s'appuie de manière étanche.

8. Intercalaire selon l'une quelconque des revendications précédentes, caractérisé en ce que ladite surface d'échanges a une forme générale rectangulaire et lesdites nervures-butées (31, 34) forment avec l'axe longitudinal de l'intercalaire un angle alpha dont la tangente est égale au rapport de la largeur de ladite surface d'échanges à sa longueur divisée par n, n étant un entier compris entre 0 et 10.

9. Intercalaire selon la revendication 8, caractérisé en ce que n = 1, lesdites nervures-butées (31, 33) étant sensiblement parallèles aux diagonales de la surface d'échanges.

10. Intercalaire selon l'une quelconque des revendications précédentes, caractérisé en ce que dans ladite zone d'échanges les éléments en relief supportant la membrane sont constitués par des nervures (35, 36) sensiblement parallèles aux nervures-butées (31, 32).

11. Intercalaire selon la revendication 10, caractérisé en ce que lesdites nervures (35, 36) ont un profil longitudinal de hauteur non uniforme.

12. Intercalaire selon la revendication 10, caractérisé en ce que lesdites nervures (35, 36) sont de hauteurs différentes.

13. Appareil échangeur de chaleur et/ou de matières entre fluides utilisable notamment avec du sang, spécialement comme hémodialyseur ou oxygénateur de sang, caractérisé en ce qu'il comprend au moins un intercalaire selon l'une quelconque des revendications précédentes.

**Claims**

1. A spacer for a device exchanging heat and/or materials between fluids, blood in particular, through at least one membrane, the said spacer being constituted by a solid plate comprising on its two opposite sides, elements in relief (35, 36) supporting the membrane and having on each side an exchange zone extending longitudinally between a distribution zone (22) and a collection zone (23) for one of the fluids, provision being made on the periphery of the plate for continuing beads of constant thickness (12, 13) to ensure a peripheral seal by superposition for the various fluids, characterised in that the said exchange zone is separated on at least one of the sides of the said solid plate into distinct compartments by at least one continuous transverse rib (31, 32, 33, 34) being joined at its two ends to the said peripheral sealing beads, the said rib constituting a leakproof baffle which on one side channels and directs the fluid flowing between the side of the said spacer and the adjacent membrane.

2. A spacer according to Claim 1, characterised in that each one of its opposite sides is divided into distinct compartments by at least one of the said rib baffles.

3. A spacer according to Claim 2, characterised in that the said rib baffles (31, 32, 33, 34) intercross back to back and, at the intercrossing points, maintain the adjacent membranes and spacers at accurate constant distances.

4. A spacer according to any one of the preceding Claims, characterised in that in the said exchange zone (24-27), there is associated with the said rib baffle (31-34) at least one opening (28, 30 ; 43) arranged in the thickness of the spacer (10, 11), allowing a fluid to flow from one side of the spacer to the opposite side.

5. A spacer according to Claim 4, characterised in that it comprises in the exchange zone (24-27) a plurality of openings (28) of a first group allowing the said fluid to flow from a first side of the exchange zone to the opposite side, called the second side and in that it also comprises a plurality of openings (29) of a second group allowing thensaid fluid to flow from the said second side of the exchange zone to the said first side.

6. A spacer according to Claim 5, characterised in that the said openings (28, 29) of the first and of the second group are respectively aligned within each one of the two longitudinal edges of the spacer.

7. A spacer according to any one of Claims 1 to 3, characterised in that the said beads (12, 13) are provided in their longitudinal portions, at the connection points with the said rib baffles, with internal protrusions (39-42) constituting buffer stops (37, 38) on which the membrane (18, 19) bears in a leakproof manner.

8. A spacer according to any one of the preceding Claims, characterised in that the said exchange surface has a generally rectangular shape and the said rib baffles (31, 34) form an angle alpha with the longitudinal axis of the spacer whose tangent is equal to the ratio of the width of the said exchange surface to its length divided by n, n being an integer comprised between 0 and 10.

9. A spacer according to Claim 8, characterised in that n = 1, the said rib baffles (31, 33) being substantially parallel to the diagonals of the exchange surface.

10. A spacer according to any one of the preceding Claims, characterised in that in the said exchange zone, the relief elements supporting the membrane are constituted by ribs (35, 36) which are substantially parallel with the rib baffles (31, 32).

11. A spacer according to Claim 10, characterised in that the said ribs (35, 36) have a longitudinal profile of non-uniform height.

12. A spacer according to Claim 10, characterised in that the said ribs (35, 36) have different heights.

13. An apparatus for the exchange of heat and/or of materials between fluids which can be used with blood in particular, especially as a haemodialyser or blood oxygenator, characterised in that it comprises at least one spacer according to any one of the preceding Claims.

**Patentansprüche**

1. Einlage für eine Vorrichtung zum Austausch von Wärme und/oder Materialien zwischen Fluiden, insbesondere Blut, durch wenigstens eine Membran hindurch, wobei die Einlage aus einer massiven Platte besteht, die auf den beiden entgegengesetzten Flächen membrantragende erhabene Elemente (35, 36) und auf jeder Fläche eine Austauschzone aufweist, die sich in Längsrichtung zwischen einer Verteilungszone (22) und einer Sammelzone (23) für eines der Fluide erstreckt, wobei auf dem Umfang der Platte durchgehende Wülste (12, 13) von konstanter Dicke vorgesehen sind, um durch Übereinanderlagerung eine Umfangsabdichtung gegenüber den verschiedenen Fluiden zu gewährleisten, dadurch gekennzeichnet, daß die Austauschzone auf wenigstens einer der Flächen der massiven Platte in gesonderte Abteile durch wenigstens eine durchgehende Querrippe (31, 32, 33, 34) unterteilt ist, die sich an ihren beiden Enden an die am Umfang angeordneten Abdichtungswülste anschließt, wobei die Rippe einen dichten Anschlag bildet, der auf einer Seite das zwischen der Fläche der Einlage und der angrenzenden Membran fließende Fluid kanalisiert und leitet.

2. Einlage nach Anspruch 1, dadurch gekennzeichnet, daß jede ihrer entgegengesetzten Flächen durch wenigstens eine der Anlagerippen in gesonderte Abteile unterteilt ist.

3. Einlage nach Anspruch 2, dadurch gekennzeichnet, daß die Anlagerippen (31, 32, 33, 34) sich Rücken an Rücken kreuzen und an den Kreuzungspunkten die Membranen und/oder angrenzenden Einlagen in gleichbleibenden genauen Abständen halten.

4. Einlage nach einem der vorhergehenden Ansprüche, dadurch gekennzeichnet, daß der Anlagerippe (31-34) in der Austauschzone (24-27) wenigstens eine Öffnung (28, 30 ; 43) zugeordnet ist, die in der Dicke der Einlage (10, 11) ausgebildet ist und einem Fluid ein Strömen von einer Fläche der Einlage zur entgegengesetzten Fläche gestattet.

5. Einlage nach Anspruch 4, dadurch gekennzeichnet, daß sie in der Austauschzone (24-27) eine Vielzahl von Öffnungen (28) einer ersten Familie aufweist, die dem Fluid ein Strömen von einer ersten Fläche der Austauschzone auf die gegenüberliegende oder zweite Fläche gestattet, und daß sie ebenfalls eine Vielzahl von Öffnungen (29) einer zweiten Familie aufweist, die dem Fluid ein Strömen von der zweiten Fläche der Austauschzone auf die erste Fläche gestattet.

6. Einlage nach Anspruch 5, dadurch gekennzeichnet, daß die Öffnungen (28, 29) der ersten und der zweiten Familie jeweils innerhalb jedes der beiden Längsränder der Einlage ausgefluchtet sind.

7. Einlage nach einem der Ansprüche 1 bis 3, dadurch gekennzeichnet, daß die Wülste (12, 13) in ihren Längsteilen an den Verbindungspunkten mit den Anlagerippen mit inneren Vorsprüngen (37-42) versehen sind, die Anschläge bilden, an denen die Membran (18, 19) dicht anliegt.

8. Einlage nach einem der vorhergehenden Ansprüche, dadurch gekennzeichnet, daß die Austauschoberfläche eine im allgemeinen rechteckige Form hat, und daß die Anlagerippen (31, 34) zusammen mit der Längsachse der Einlage einen Winkel α bilden, dessen Tangens gleich dem Verhältnis der Breite der Austauschoberfläche zu ihrer Länge geteilt durch n ist, wobei n eine ganze Zahl zwischen 0 und 10 ist.

9. Einlage nach Anspruch 8, dadurch gekennzeichnet, daß n = 1, wobei die Anlagerippen (31, 34) zu den Diagonalen der Austauschoberfläche im wesentlichen parallel sind.

10. Einlage nach einem der vorhergehenden Ansprüche, dadurch gekennzeichnet, daß in der Austauschzone die membrantragenden erhabenen Elemente durch zu den Anlagerippen (31, 32) im wesentlichen parallele Rippen (35, 36) gebildet sind.

11. Einlage nach Anspruch 10, dadurch gekennzeichnet, daß die Rippen (35, 36) ein Längsprofil von ungleichmäßiger Höhe haben.

12. Einlage nach Anspruch 10, dadurch gekennzeichnet, daß die Rippen (35, 36) unterschiedliche Höhen haben.

13. Vorrichtung zum Austausch von Wärme und/oder Materialien zwischen insbesondere zusammen mit Blut verwendbaren Fluiden, insbesondere als Hämodialysator oder Blutoxidationsvorrichtung, dadurch gekennzeichnet, daß sie wenigstens eine Einlage nach einem der vorhergehenden Ansprüche aufweist.

**Fig.1.**

**Fig.2.**

## Fig.3.

## Fig.4.

## Fig.5.